# EUROPEAN PATENT APPLICATION

(11) **EP 1 738 986 A1**
(43) Date of publication of application: **03.01.2007**
(21) Application number: 05447151.1
(22) Date of filing: 28.06.2005
(51) Int. Cl.: B62B 1/20

(54) **S-Bracket for wheelbarrow enlarger**

(71) Applicant: Hellebosch, Jan, 2930 Brasschaat (BE)
(72) Inventor: Hellebosch, Jan, 2930 Brasschaat (BE)

(57) **Abstract**

Bracket (1) for Wheelbarrow enlarger (3) is therefore typified by the fact that it primarily consists of a bent plate (2) that can be placed around the rim (5) of a wheelbarrow basin (6) to which the bracket (1) securely anchors itself.

## Description

This invention is a bracket for fast, safe and easy assembly, disassembly and anchoring of a Wheelbarrow enlarger: THE S-BRACKET.

The European patent no. 0579316 granted on January 24th, 1996 features a description of an auxiliary piece for wheelbarrows that enlarges the loading area of a basin-type wheelbarrow. This wheelbarrow enlarger supports the rim of the wheelbarrow with brackets. In order for the wheelbarrow enlarger to clamp onto the wheelbarrow basin, the brackets are attached to each other along the underside of the wheelbarrow using carrier straps.

The purpose of the invention is to greatly simplify the assembly, disassembly and securing of the wheelbarrow enlarger to the rim of the wheelbarrow in order to make the use of carrier straps unnecessary and to greatly advance and modernize the state of the art with respect to this point.

This is why the invention features a plastic bracket in the shape of an "S", designed in such a way that this S-bracket can be slid over the bent upper-rim of a basin-type wheelbarrow and, thanks to elasticity and resilience, takes on its original form again so that the S-bracket securely anchors itself around the rim of the wheelbarrow. By pulling on the diagonally tapered right lip on the end of the S-bracket, the wheelbarrow enlarger can be removed again.

This assembly technique simplifies the use of the wheelbarrow enlarger. The carrier straps, which must be pulled through under the wheelbarrow before anchoring the wheelbarrow enlarger, are rendered completely unnecessary by the S-brackets. The assembly and disassembly of the Wheelbarrow enlarger is quicker and easier and because the whole system is composed of a single piece, no components can get lost.

In the interests of better demonstrating the features according to the invention, a preferred design is detailed below as an example without any limitations with references to the accompanying drawings, in which:
Figure A illustrates a wheelbarrow with 3 S-brackets according to the invention.
Figure B shows a 45-degree right side view of an S-bracket according to the invention.
Figure C shows a 45-degree left side view of an S-bracket according to the invention.
Figure D shows a 90-degree side view of an S-bracket before assembly on the wheelbarrow.
Figure E shows a 90-degree side view of an S-bracket during assembly on the wheelbarrow.
Figure F shows a 90-degree side view of an S-bracket after assembly on the wheelbarrow.
Figure G illustrates a basin-type wheelbarrow

As illustrated in figures B and C, according to the invention, the S-bracket 1 primarily consists of an S-shaped plate 2 which makes up a fixed component of the Wheelbarrow enlarger 3.

The S-bracket 1 is made up of an elastic and resilient type of plastic that always returns to its original shape.

As illustrated in figures D and E, if the S-bracket 1 is pushed with downward pressure over the rim 5 of the wheelbarrow basin 6, the S-bracket 1 will automatically open up thanks to the diagonally tapered lip 4 and the underside 7 of the wheelbarrow enlarger 3.

As illustrated in figures E and F, the S-bracket 1 automatically closes up when the right middle-piece 8 of the S-bracket 1 is pushed past the rim 5 of the wheelbarrow basin 6.

The middle-piece 8 of the S-bracket 1 is straight, so as to achieve the greatest possible anchoring power.

The S-bracket 1 is made of polypropylene.

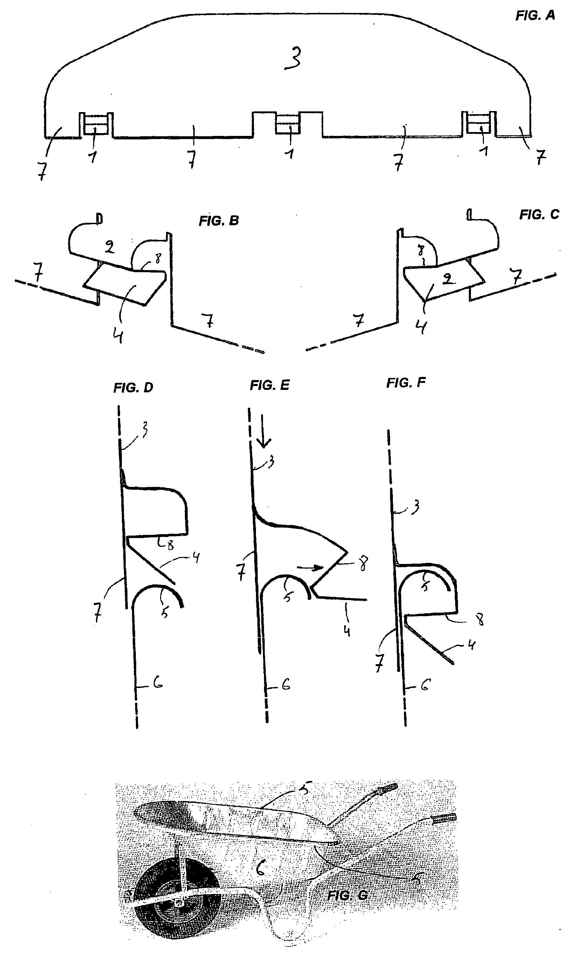

## Claims

1. Bracket (1) for Wheelbarrow enlarger (3) is therefore typified by the fact that it primarily consists of a bent plate (2) that can be placed around the rim (5) of a wheelbarrow basin (6) to which the bracket (1) securely anchors itself

2. Bracket (1), according to conclusion 1, is therefore typified by the fact that it primarily consists of an S-shaped plate (2) which is made from elastic and resilient plastic.

3. Bracket (1), according to conclusions 1 and 2, is therefore typified by the fact that the lower part of the bracket (1) consists of a diagonally-tapered right lip (4) which, via cooperation with the underside (7) of the wheelbarrow enlarger, automatically opens itself up during assembly onto the wheelbarrow and slides over the rim (5) of the wheelbarrow basin (6) if a downward pressure is exerted onto the bracket (1).

4. Bracket (1), according to conclusions 1 and 2, is therefore typified by the fact that the middle-piece (8) of the bracket (1) is a straight piece for the achievement of the greatest possible anchoring power.

5. Bracket (1), according to the above conclusions, is therefore typified by the fact that the brackets (1) are made from polypropylene.
